# EUROPEAN PATENT SPECIFICATION

(11) **EP 3 489 850 B1**
(45) Date of publication and mention of the grant of the patent: **14.04.2021**
(21) Application number: 17830485.3
(22) Date of filing: 20.07.2017
(51) Int. Cl.: G06F 21/31, G06F 21/32, G06K 9/00

(54) **BIOLOGICAL CHARACTERISTIC RECOGNITION METHOD AND DEVICE, AND STORAGE MEDIUM**
VERFAHREN UND VORRICHTUNG ZUR ERKENNUNG BIOLOGISCHE EIGENSCHAFTEN SOWIE SPEICHERMEDIUM
PROCÉDÉ ET DISPOSITIF DE RECONNAISSANCE DE CARACTÉRISTIQUES BIOLOGIQUES, ET SUPPORT D'INFORMATIONS

(30) Priority: 20.07.2016 CN 201610574489
(43) Date of publication of application: 29.05.2019
(73) Proprietor: Tencent Technology (Shenzhen) Company Limited, Shenzhen, Guangdong 518057 (CN)
(72) Inventor: CHEN, Jie, Shenzhen, Guangdong 518057 (CN)
(74) Representative: Eisenführ Speiser
(86) International application number: PCT/CN2017/093588
(87) International publication number: WO 2018/014851

(56) References cited:
- CN-A- 101 635 743
- CN-A- 104 699 931
- CN-A- 104 809 371
- CN-A- 105 188 522
- CN-U- 205 179 369
- US-A1- 2016 180 150
- US-A1- 2016 183 812
- US-B1- 8 984 622

## Description

### RELATED APPLICATION

This application claims priority to Chinese Patent Application No. 201610574489.2, titled "BIOLOGICAL CHARACTERISTIC RECOGNITION METHOD AND DEVICE" filed with the Chinese Patent Office on July 20, 2016, which is incorporated by reference in its entirety.

### FIELD OF THE TECHNOLOGY

The present disclosure relates to the technical field of computers, and in particular to a biological feature recognition method and device, and a storage medium.

### BACKGROUND OF THE DISCLOSURE

With rapid development of biological recognition technologies, currently, devices for biological recognition, such as fingerprint recognition and facial recognition, appear correspondingly, and are widely applied to access control and attendance checking.

In an example in which an attendance checking device uses facial recognition, a full-frontal face image of a person whose attendance is to be checked is recorded in advance. During attendance checking, the person whose attendance is to be checked only needs to face toward the attendance checking device; and after recognizing that a currently acquired facial image matches the pre-stored facial image of the person whose attendance is to be checked, the attendance checking device prompts that attendance is successfully checked.

Compared with the conventional card-reading attendance checking manner, with a facial-recognition attendance checking manner, a probability that someone else uses a card of a person to get attendance of the person checked is reduced significantly. However, someone uses a photograph of another person to get attendance of the person checked. In a case that similarity between a feature read by the attendance checking device from the photograph and a pre-stored feature is higher than a preset threshold, the attendance is also successfully checked. In view of the above, the application of the biological feature recognition is to be greatly improved US2016180150 A1 discloses a system that employs a face template including historical facial image data for the user can be identified. Current facial image data can be compared to the face template to determine if a match exists. Biometric sensor data, such as heart rate data, may also be received for the user. The biometric sensor data may be evaluated to determine if the user is currently located at the user device. If the user is currently located at the user device and the current facial image data matches the face template, access to the online education content may be provided to the user at the user device.

US2016183812 A1 discloses a biometric authentication apparatus may obtain at least two types of biosignals, extract a same type of physiological features from each of the biosignals, and determine whether the biosignals are generated from a same living body based on the extracted same type of physiological features.

### SUMMARY

The described embodiments are to be considered only as illustrative and not restrictive. The scope of the invention is defined by the appended claims, the dependent claims define further embodiments of the invention. To solve the problem in the conventional technology that a biological recognition application still has vulnerability, a biological feature recognition method is provided according to embodiments of the present disclosure. In the method, recognition succeeds only in a case that current facial color data of a user matches current heart rate data of the user, so as to effectively avoid the vulnerability of the biological recognition application. A corresponding device is further provided according to the embodiments of the present disclosure.

According to a first aspect of the embodiments of the present disclosure, a biological feature recognition method is provided, which includes: obtaining, by a biological feature recognition device, a facial image of a user on whom feature recognition is being performed and current heart rate data of the user; determining, by the biological feature recognition device based on the facial image, current facial color data of the user and a correspondence between facial color data and heart rate data of the user; determining, by the biological feature recognition device based on the correspondence between the facial color data and the heart rate data of the user, whether the obtained current facial color data matches the current heart rate data; determining, by the biological feature recognition device, that user identification succeeds, if the current facial color data matches the current heart rate data; and determining, by the biological feature recognition device, that the user identification fails, if the current facial color data does not match the current heart rate data.

According to a second aspect of the embodiments of the present disclosure, a biological feature recognition device is provided, which includes an obtaining unit, a first determining unit, a second determining unit, and a recognition unit. The obtaining unit is configured to obtain a facial image of a user on whom feature recognition is being performed and current heart rate data of the user. The first determining unit is configured to determine, based on the facial image, current facial color data of the user and a correspondence between facial color data and heart rate data of the user. The second determining unit is configured to determine, based on the correspondence between the facial color data and the heart rate data of the user determined by the first determining unit, whether the current facial color data obtained by the obtaining unit matches the current heart rate data. The recognition unit is configured to determine that user identification succeeds if the second determining unit determines that the current facial color data matches the current heart rate data, and determine that the user identification fails if the current facial color data does not match the current heart rate data.

According to a third aspect of the embodiments of the present disclosure, a biological feature recognition device is provided, which includes a processor, a memory, a camera, and a heart rate collector. The camera is configured to acquire a facial image of a user on whom feature recognition is being performed. The heart rate collector is configured to collect current heart rate data of the user. The memory is configured to store a correspondence between facial color data and heart rate data of the user. The processor is configured to obtain the facial image acquired by the camera, determine, based on the facial image, current facial color data of the user and the correspondence between the facial color data and the heart rate data of the user, and obtain current heart rate data of the user from the heart rate collector; determine, based on the correspondence between the facial color data and the heart rate data of the user, whether the obtained current facial color data matches the current heart rate data; and determine that user identification succeeds if the current facial color data matches the current heart rate data, and determine that the user identification fails if the current facial color data does not match the current heart rate data.

According to a fourth aspect of the embodiments of the present disclosure, a non-volatile storage medium storing computer readable instructions is provided. When the instructions are executed, a computer is caused to execute the foregoing biological feature recognition method.

For the problem in the conventional technology that a photograph of another person is used for recognition or a photograph is maliciously used for recognition, with the biological feature recognition method according to embodiments of the present disclosure, the recognition succeeds only in a case that current facial color data of a user matches current heart rate data of the user, thereby effectively avoiding vulnerability of the biological recognition application and improving recognition accuracy of the biological feature recognition device.

### BRIEF DESCRIPTION OF THE DRAWINGS

To more explicitly explain technical solutions in embodiments of the present disclosure, accompanying drawings needed in describing the embodiments are briefly introduced in the following. Apparently, the following accompanying drawings show only some embodiments of the present disclosure, and a person skilled in the art can obtain other accompanying drawings from the accompanying drawings without creative work.
FIG. 1 is a schematic diagram of collecting facial color data and heart rate data of a user and constructing a correspondence between the facial color data and the heart rate data of the user, in a scenario in which the user runs on a running machine according to an embodiment of the present disclosure;
FIG. 2 is a schematic diagram showing a curve of a correspondence between facial color data and heart rate data of a user according to an embodiment of the present disclosure;
FIG. 3 is a schematic diagram of identifying a user by a biological feature recognition device according to an embodiment of the present disclosure;
FIG. 4 is a schematic diagram showing a curve of a correspondence between facial color data and heart rate data of a user according to another embodiment of the present invention;
FIG. 5 is a schematic diagram of a biological feature recognition method according to an embodiment of the present disclosure;
FIG. 6 is a schematic diagram of a biological feature recognition device according to an embodiment of the present disclosure;
FIG. 7 is a schematic diagram of a biological feature recognition device according to another embodiment of the present disclosure; and
FIG. 8 is a schematic diagram of a biological feature recognition device according to still another embodiment of the present disclosure.

### DESCRIPTION OF EMBODIMENTS

According to embodiments of the present disclosure, a biological feature recognition method is provided. With the method, the recognition succeeds only in a case that current facial color data of a user matches current heart rate data of the user, thereby effectively avoiding vulnerability of a biological recognition application and improving recognition accuracy of a biological feature recognition device. According to the embodiments of the present disclosure, a corresponding device is further provided. Details descriptions are separately provided below.

The technical solutions in the embodiments of the present disclosure are described clearly and completely with reference to the accompanying drawings in the embodiments of the present disclosure. Obviously, the described embodiments are only some embodiments instead of all embodiments of the present disclosure. All other embodiments obtained by a person skilled in the art based on the embodiments of the present disclosure without any creative work fall within the protection scope of the present disclosure.

Currently, a relatively large bottleneck in facial recognition is how to determine that a natural person, instead of a photograph, is recognized. With regard to the problem, a biological feature recognition method is provided according to the embodiments of the present disclosure. According to a principle that while a heart rate of a human body changes, a facial color also changes correspondingly, correspondences between facial color data and heart rate data of users of fixed groups are constructed. A correspondence between facial color data and heart rate data of each user includes facial color data of the user at different heart rates. Then, the correspondence is stored into a biological feature recognition device, and the biological feature recognition device may be a device such as an attendance checking device.

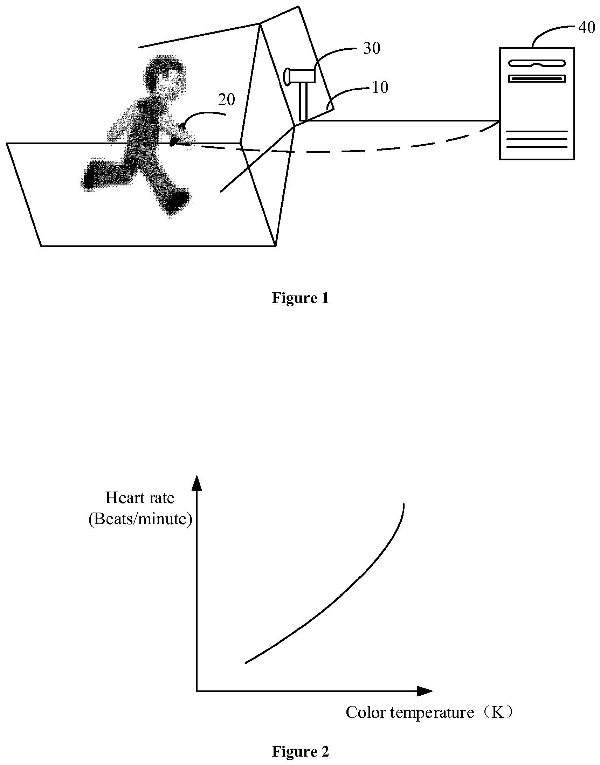

To better understand use of a correspondence between facial color data and heart rate data of a user, a process of establishing a correspondence between facial color data and heart rate data of a user in an embodiment of the present disclosure is introduced below with reference to FIG. 1.

Data for heart rate changes and corresponding facial color changes of a user during a running process can be collected in a scenario in which the user runs on a running machine.

An attendance checking device is used as an example of the biological feature recognition device. If the attendance checking device is responsible for checking attendance of 30 persons in a company, it is required to record correspondences between facial color data and heart rate data of the 30 persons into the attendance checking device. In this case, for each person, a correspondence between facial color data and heart rate data of the person needs to be established.

As shown in FIG. 1, for example, a user on a running machine 10 is one of the 30 persons, the user wears a heart rate collector 20 on a wrist, and a camera 30 is mounted on the running machine 10. The camera 30 is configured to acquire a facial image of the user during a running process of the user, and the heart rate collector 20 is configured to collect heart rate data of the user during the running process of the user. The heart rate collector 20 may be a smart bracelet, and can measure a heart rate by measuring pulses.

When a facial image of the user is acquired by the camera 30 and heart rate data is collected by the heart rate collector 20, the facial image and the heart rate data of the user may be transmitted to a data collection device 40. The data collection device 40 may be a separate device or the biological feature recognition device in the embodiment of the present disclosure. The camera 30 may be communicatively connected to the data collection device 40 in a wired manner, and the heart rate collector 20 may be communicatively connected to the data collection device 40 in a wireless manner.

The data collection device 40 obtains a large number of facial images and a large number of pieces of heart rate data, and may match the facial images and the heart rate data in accordance with time. The data collection device 40 requires to determine facial color data from the facial images. In the embodiment of the present disclosure, the facial color data may be quantified based on a color temperature or three primary colors. The three primary colors are: red (R), green (G), and blue (B). Certainly, not only the color temperature or three primary colors can be used for quantification, but also another physical parameter, such as brightness, can be used for quantification.

A color temperature indicates a light color of a light source, and its unit is Kelvin (K). A color temperature of a light source is determined by comparing a color of the light source with a theoretical heat blackbody radiator. A Kelvin temperature of the heat blackbody radiator when the heat blackbody radiator matches the color of the light source is the color temperature of the light source, and the color temperature is directly related to the Planck blackbody radiation law.

For example, color temperatures of some common light sources are as follows. A color temperature of standard candlelight is 1930 K, a color temperature of a tungsten lamp ranges from 2760 to 2900 K, a color temperature of a fluorescent lamp is 3000 K, a color temperature of a flash lamp is 3800 K, a color temperature of noon sunlight is 5600 K, a color temperature of an electronic flash lamp is 6000 K, and so on. A color temperature of a human facial color may range from a dozen K to dozens of K.

The RGB is a color standard, in which various colors are obtained by changing channels of three colors, namely, red (R), green (G), and blue (B), and mutual overlay between the three colors. Therefore, RGB is also referred to as three primary colors, and is represented as red (R), green (G), and blue (B) in English.

In a computer, the so-called "amount" of the RGB indicates brightness, and is represented by an integer. Usually, each color in the RGB has 256 levels of brightness, represented by numerals 0, 1, 2, ..., 255. Therefore, for each facial image, values of R, G, and B of the facial image can be determined.

A solution of determining facial color data from a facial image may include a method for processing RGB and a method for processing a color temperature.

Because at different heart rates, a facial color mainly changes from pale to red or from red to pale, the method for processing RGB includes: extracting red (R) values of all pixels of a facial image, calculating an average of the R values, and using the average of the R values as facial color data of the current facial image.

The method for processing a color temperature includes: determining averages of R, G, and B of all pixels of a facial image, and substituting, according to a color temperature estimation algorithm, the averages of R, G, and B of the facial image into the color temperature estimation algorithm, to obtain a color temperature of the current facial image.

A unit of a heart rate is beats/minute. Therefore, after obtaining facial images in three consecutive minutes and heart rate data in the three minutes, the data collection device 40 can construct a correspondence between the facial images and the heart rate data. In examples of the present disclosure, each person is tested for three minutes. Therefore, data collected in the three minutes is used herein, and the three minutes should not be understood as a limitation to a test time period.

For ease of description, in the embodiment of the present disclosure, only heart rate data and facial images every 20 seconds are analyzed. In the embodiment of the present disclosure, according to continuity of motion, a facial image of a user is analyzed every 20 seconds, and facial color data, such as R, G, and B values or a color temperature value, of the user is obtained from the facial image. A color temperature is used as an example for description below.

**Table 1: Correspondence between heart rate data and facial color data**

| Facial image (every 20 seconds) | Heart rate data (beats/minute) | Color temperature value (K) |
|---|---|---|
| First facial image | 72 | 13 |
| Second facial image | 78 | 16 |
| Third facial image | 85 | 20 |
| Fourth facial image | 92 | 25 |
| Fifth facial image | 99 | 29 |
| Sixth facial image | 105 | 36 |
| Seventh facial image | 110 | 42 |
| Eighth facial image | 115 | 49 |
| Ninth facial image | 121 | 56 |

The foregoing table 1 is described by using trend data as an example, and data in a correspondence of each user is based on actual measured values. Moreover, for ease of description, table 1 merely lists data collected every 20 seconds. Actually, the data may be consecutive. A correspondence between heart rates and facial colors of a natural person is established based on heart rate data and facial color data (such as a color temperature after quantification). The correspondence may be indicated as a high-order curve: *y*=*axⁿ*+*bₓ*^{*n*-1}+...+*t*. In which, x may represent a heart rate or a facial color, y may represent a facial color or a heart rate, a, b, and t represent constants, and n represents an integer greater than or equal to 2.

For each user, there is one correspondence between facial color data and heart rate data. An index may be created for the correspondence based on facial images of the user. A process of creating the index is similar to a process of card reading in existing attendance checking. A facial feature of each user is substantially unique. Therefore, when the user uses an attendance checking device provided in this application, the attendance checking device acquires a facial image of the user, and performs, based on the facial image of the user, feature comparison with pre-stored facial images of users. In a case that the facial image of the user matches a pre-stored user facial image, a correspondence between facial color data and heart rate data of the user can be extracted. Alternatively, after a serial number of the user is determined based on the facial image of the user, a correspondence between facial color data and heart rate data of the user is searched based on the serial number of the user. This process includes: setting a serial number for the user when recording information of the user, determining a serial number of a user having attendance checked through the feature comparison, and searching the correspondence between facial color data and heart rate data of the user based on the serial number.

FIG. 2 shows a correspondence between heart rates and facial colors. One corresponding facial color value can be found by using one heart rate value on a curve shown in FIG. 2. Similarly, one corresponding heart rate value can be found by using one facial color value on the curve shown in FIG. 2

After the foregoing correspondence is established, the correspondence between the facial color data and the heart rate data of the user is stored in the biological feature recognition device in the embodiment of the present disclosure.

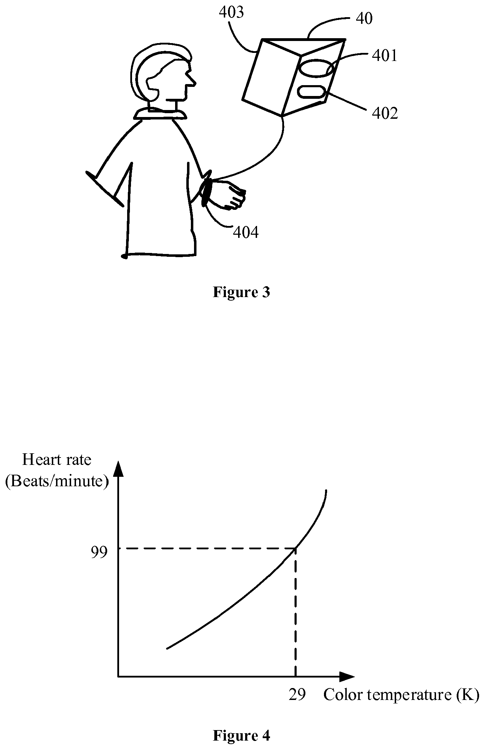

As shown in FIG. 3, a biological feature recognition device 40 according to an embodiment of the present disclosure includes a processor 401, a memory 402, a camera 403, and a heart rate collector 404. When a user is using the biological feature recognition device 40, the user faces toward the camera 403, the camera 403 acquires a current facial image of the user on whom feature recognition is being performed. The user wears the heart rate collector 404 on a wrist, and a heart rate is collected based on pulses. The heart rate collector 404 is configured to collect current heart rate data of the user. The memory 402 stores a correspondence between facial color data and heart rate data of the user. The correspondence may be understood by referring to corresponding descriptions of FIG. 1 and FIG. 2.

The processor 401 is configured to: obtain the facial image acquired by the camera, determine the current facial color data from the current facial image, and obtain current heart rate data of the user from the heart rate collector; determine, based on the facial image of the user, a correspondence between facial color data and heart rate data of the user from pre-stored correspondences between facial color data and heart rate data of multiple users. The process is similar to a process of card reading in the conventional attendance checking. A facial feature of each user is substantially unique. When the user uses an attendance checking device provided in this application, the attendance checking device acquires a facial image of the user, and performs, based on the facial image of the user, feature comparison with pre-stored facial images of users. In a case that the facial image of the user is matched, a correspondence between facial color data and heart rate data of the user can be extracted. Then, it is determined whether the obtained current facial color data matches the current heart rate data. It is determined that recognition succeeds if the current facial color data matches the current heart rate data, and it is determined that the recognition fails if the current facial color data does not match the current heart rate data.

As shown in FIG. 4, it is assumed that the processor 401 determines that a color temperature value of a current facial color is 29 K, and current heart rate data obtained by the processor 401 is 98 beats/minute. In this case, it can be determined from a curve of FIG. 4 that matching heart rate data corresponding to the color temperature value 29K is 99 beats/minute. It can be determined that a heart rate difference between the matching heart rate data and the current heart rate data is 1 beat/minute. If a preset heart rate threshold is 3 beats/minute, it is indicated that the heart rate difference falls within the preset heart rate threshold range, thereby determining that the current facial color data matches the current heart rate data.

It is assumed that the processor 401 determines that current heart rate data is 99 beats/minute, and a color temperature value of a current facial color obtained by the processor 401 is 28.5 K. In this case, it can be determined from the curve of FIG. 4 that a matching color temperature value corresponding to the current heart rate data 99 beats/minute is 29 K. It can be determined that a facial color difference between the matching color temperature value and the color temperature value of the current facial color is 0.5 K. If a preset facial color threshold is 1 K, it is indicated that the facial color difference falls within the preset facial color threshold range, thereby determining that the current facial color data matches the current heart rate data.

It can be known from the foregoing description that, with the solution provided in the embodiment of the present disclosure, maliciously using a photograph for facial recognition is effectively avoided, thereby improving recognition accuracy of the biological feature recognition device.

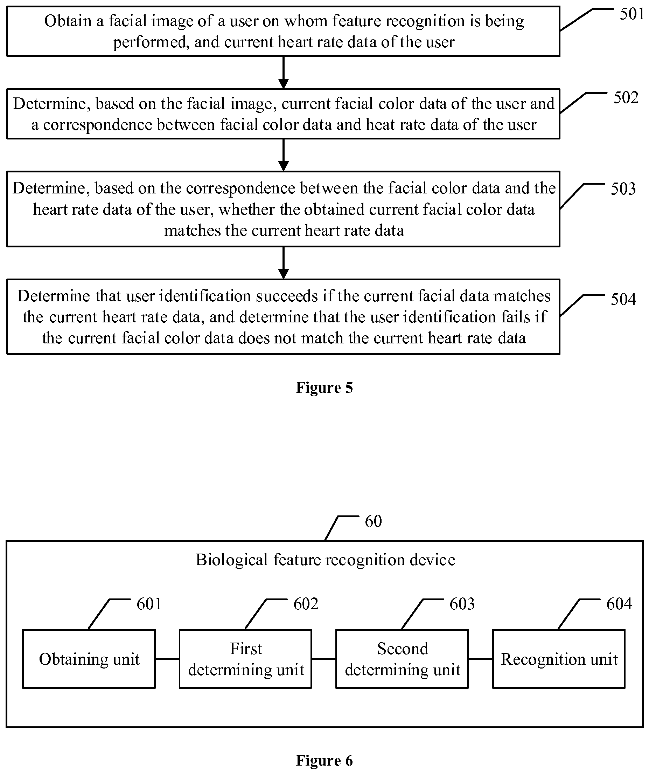

Establishing of a correspondence between facial color data and heart rate data of a user and an exemplary scenario of using the biological feature recognition device according to the embodiment of the present disclosure are described above. A biological feature recognition method in an embodiment of the present disclosure is described below with reference to FIG. 5.

As shown in FIG. 5, a biological feature recognition method according to an embodiment of the present disclosure includes steps 501 to 504 in the following.

In step 501, a facial image of a user on whom feature recognition is being performed, and current heart rate data of the user are obtained.

In step 502, based on the facial image, current facial color data of the user and a correspondence between facial color data and heart rate data of the user are determined.

In the embodiment of the present disclosure, the facial image of the user is usually acquired by a camera. The camera is generally configured to only acquire images. Then, current facial color data of the user can be determined from the image acquired by the camera. This process may be understood by referring to descriptions in the foregoing related parts. Details are not described herein again.

In step 503, according to the correspondence between the facial color data and the heart rate data of the user, it is determined whether the obtained current facial color data matches the current heart rate data.

In step 504, it is determined that user identification succeeds if the current facial color data matches the current heart rate data, and it is determined that user identification fails if the current facial color data does not match the current heart rate data.

For the problem in the conventional technology that a photograph of another person is used for recognition or a photograph is maliciously used for recognition, with the biological feature recognition method according to embodiments of the present disclosure, the recognition succeeds only in a case that current facial color data of a user matches current heart rate data of the user, thereby effectively avoiding vulnerability of the biological recognition application and improving recognition accuracy of the biological feature recognition device.

Optionally, before the obtaining a facial image of a user on whom feature recognition is being performed, the method may further include: receiving the correspondence between the facial color data and the heart rate data of the user; and storing the correspondence, where the correspondence is obtained by collecting in advance facial color data of the user at different heart rates.

In the embodiment of the present disclosure, the correspondence is established in advance. As described in descriptions of FIG. 1 and FIG. 2, data collection may be performed and a correspondence may be established first for a user whose correspondence between facial color data and heart rate data needs to be recorded. Subsequently, the established correspondences of users are imported into a biological feature recognition device. In this way, in subsequent biological feature recognition processes, the correspondence can be directly used for recognition.

Optionally, the determining, based on the correspondence between the facial color data and the heart rate data of the user, whether the obtained current facial color data matches the current heart rate data includes: searching, based on the current facial color data, the correspondence for matching heart rate data corresponding to the current facial color data;determining a heart rate difference between the matching heart rate data and the current heart rate data; and determining that the current facial color data matches the current heart rate data, in a case that the heart rate difference falls within a preset heart rate threshold range.

In the embodiment of the present disclosure, current facial color data may be matched with current heart rate data in the following manner. Matching heart rate data is determined from a correspondence between facial color data and heart rate data of the user by using the current facial color data, and then the matching heart rate data is compared with the current heart rate data, to determine a heart rate difference between the matching heart rate data and the current heart rate data. In a case that the heart rate difference falls within a preset heart rate threshold range, it is determined that the current facial color data matches the current heart rate data.

Optionally, the determining, based on the correspondence between the facial color data and the heart rate data of the user, whether the obtained current facial color data matches the current heart rate data includes: searching, based on the current heart rate data, the correspondence for matching facial color data corresponding to the current heart rate data; determining a facial color difference between the matching facial color data and the current facial color data; and determining that the current facial color data matches the current heart rate data, in a case that the facial color difference falls within a preset facial color threshold range.

In the embodiment of the present disclosure, current facial color data may be matched with current heart rate data in the following manner. Matching facial color data is determined from the correspondence between facial color data and heart rate data of the user by using the current heart rate data, and the matching facial color data is compared with the current facial color data, to determine a facial color difference between the matching facial color data and the current facial color data.

In a case that the facial color difference falls within a preset facial color threshold range, it is determined that the current facial color data matches the current heart rate data.

The solutions in multiple embodiments of the present disclosure are described above. During facial detection and authentication, a current facial color and a current heart rate of a user are monitored simultaneously. Then, it is determined whether a correspondence between the current facial color and the current heart rate matches a pre-stored correspondence. If the correspondence matches the pre-stored correspondence, it can be determined that the user is a normal user. Otherwise, it is determined that the facial authentication is malicious.

As shown in FIG. 6, a biological feature recognition device 60 according to an embodiment of the present disclosure includes: an obtaining unit 601, a first determining unit 602, a second determining unit 603 and a recognition unit 604. The obtaining unit 601 is configured to obtain a facial image of a user on whom feature recognition is being performed and current heart rate data of the user. The first determining unit 602 is configured to determine, based on the facial image obtained by the obtaining unit 601, current facial color data of the user and a correspondence between facial color data and heart rate data of the user. The second determining unit 603 is configured to determine, based on the correspondence between the facial color data and the heart rate data of the user determined by the first determining unit 602, whether the current facial color data obtained by the obtaining unit 601 matches the current heart rate data. The recognition unit 604 is configured to determine that user identification succeeds if the second determining unit 603 determines that the current facial color data matches the current heart rate data, and determine that the user identification fails if the current facial color data does not match the current heart rate data.

In the embodiment of the present disclosure, the obtaining unit 601 obtains a facial image of a user on whom feature recognition is being performed and current heart rate data of the user. The first determining unit 602 determines, based on the facial image obtained by the obtaining unit 601, current facial color data of the user and a correspondence between facial color data and heart rate data of the user. The second determining unit 603 determines, based on the correspondence between the facial color data and the heart rate data of the user determined by the first determining unit 602, whether the current facial color data obtained by the obtaining unit matches the current heart rate data. The recognition unit 604 determines that user identification succeeds if the second determining unit 603 determines that the current facial color data matches the current heart rate data, and determines that user identification fails if the current facial color data does not match the current heart rate data. For the problem in the conventional technology that a photograph of another person is used for recognition or a photograph is maliciously used for recognition, with the biological feature recognition device according to the embodiments of the present disclosure, the recognition succeeds only in a case that current facial color data of the user matches current heart rate data of the user, thereby effectively avoiding vulnerability of the biological recognition application and improving recognition accuracy of the biological feature recognition device.

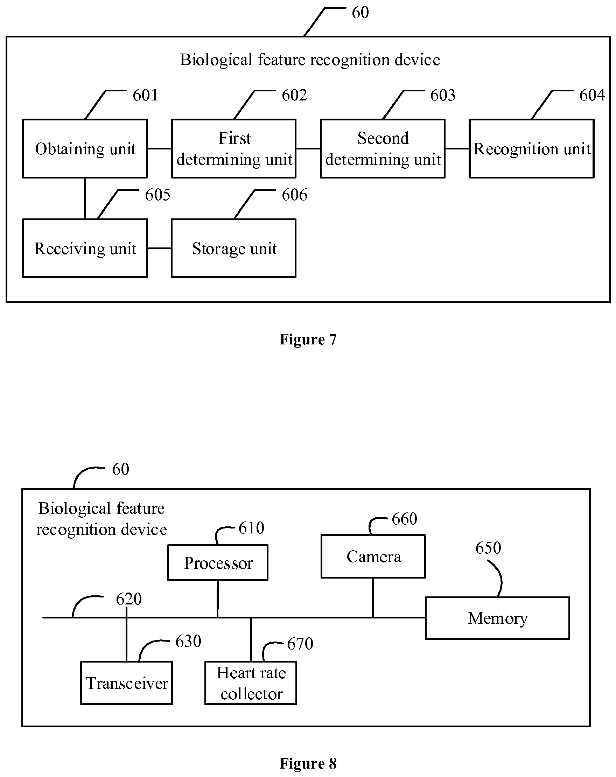

Optionally, referring to FIG. 7, in the biological feature recognition device 60 according to another embodiment of the present disclosure, the device 60 further includes a receiving unit 605 and a storage unit 606.

The receiving unit 605 is configured to receive the correspondence between the facial color data and the heart rate data of the user.

The storage unit 606 is configured to store the correspondence received by the receiving unit 605. The correspondence is obtained by collecting in advance facial color data of the user at different heart rates.

Optionally, the second determining unit 603 is configured to: search, based on the current facial color data, the correspondence for matching heart rate data corresponding to the current facial color data; determine a heart rate difference between the matching heart rate data and the current heart rate data; and determine that the current facial color data matches the current heart rate data, in a case that the heart rate difference falls within a preset heart rate threshold range.

Optionally, the second determining unit 603 is configured to: search, based on the current heart rate data, the correspondence for matching facial color data corresponding to the current heart rate data; determine a facial color difference between the matching facial color data and the current facial color data; and determine that the current facial color data matches the current heart rate data, in a case that the facial color difference falls within a preset facial color threshold range.

FIG. 8 is a schematic structural diagram of a biological feature recognition device 60 according to an embodiment of the present disclosure. The biological feature recognition device 60 includes a processor 610, a camera 660, a heart rate collector 670, a memory 650, and a transceiver 630. The camera 660 may be configured to collect a facial image of a user on whom feature recognition is being performed. The heart rate collector 670 may be configured to collect current heart rate data of the user. The memory 650 may include a read-only memory and a random access memory, and provides an operation instruction and data to the processor 610. The memory 650 may further include a non-volatile random access memory (NVRAM).

In some implementations, the memory 650 stores the following elements: an executable module or a data structure, or a subset or an extension set of the executable module and the data structure.

In the embodiment of the present disclosure, by invoking the operation instruction (the operation instruction may be stored in an operating system) stored in the memory 650, the biological feature recognition device performs the following operations: obtaining a facial image of a user on whom feature recognition is being performed and current heart rate data of the user;determining, based on the facial image, current facial color data of the user and a correspondence between facial color data and heart rate data of the user; determining, based on the correspondence between the facial color data and the heart rate data of the user, whether the obtained current facial color data matches the current heart rate data; and determining that user identification succeeds if the current facial color data matches the current heart rate data, and determine that user identification fails if the current facial color data does not match the current heart rate data.

For the problem in the conventional technology that a photograph of another person is used for recognition or a photograph is maliciously used for recognition, with the biological feature recognition device according to the embodiments of the present disclosure, the recognition succeeds only in a case that current facial color data of the user matches current heart rate data of the user, thereby effectively avoiding vulnerability of the biological recognition application and improving recognition accuracy of the biological feature recognition device.

The processor 610 controls an operation of the biological feature recognition device 60, and the processor 610 may also be referred to as a central processing unit (CPU). The memory 650 may include a read-only memory and a random access memory, and provides an instruction and data to the processor 610. The memory 650 may further include a non-volatile random access memory (NVRAM). In a specific application, all components of the biological feature recognition device 60 are coupled via a bus system 620. In addition to a data bus, the bus system 620 may further include a power source bus, a control bus, a state signal bus, and the like. However, for ease of clear description, all types of buses in the diagram are marked as the bus system 620.

The method disclosed in the foregoing embodiments of the present disclosure may be applied to the processor 610, or may be implemented by the processor 610. The processor 610 may be an integrated circuit chip and has a signal processing capability. In an implementation process, steps in the foregoing method may be implemented through a hardware integrated logical circuit in the processor 610, or a software instruction. The processor 610 may be a general-purpose processor, a digital signal processor (DSP), an application-specific integrated circuit (ASIC), a field programmable gate array (FPGA), other programmable logic component, a discrete gate or a transistor logic device, and a discrete hardware component. The processor 610 may implement or execute methods, steps, and logical block diagrams disclosed in the embodiments of the present disclosure. The general-purpose processor may be a microprocessor or any conventional processor or the like. The steps in the method disclosed in the embodiments of the present disclosure may be directly implemented by a hardware decoding processor, or may be implemented by hardware in a decoding processor in combination with software modules. The software module may be located in a common storage medium in the field, such as a random access memory, a flash memory, a read-only memory, a programmable read-only memory, an electrically erasable programmable memory, or a register. The storage medium is located in the memory 650, and the processor 610 reads information in the memory 650 and performs the steps of the foregoing method in combination with hardware of the processor.

Optionally, the transceiver 630 is configured to receive the correspondence between the facial color data and the heart rate data of the user.

The memory 650 is configured to store the correspondence. The correspondence is obtained by collecting in advance facial color data of the user at different heart rates.

Optionally, the processor 610 is further configured to: search, based on the current facial color data, the correspondence for matching heart rate data corresponding to the current facial color data; determine a heart rate difference between the matching heart rate data and the current heart rate data; and determine that the current facial color data matches the current heart rate data, in a case that the heart rate difference falls within a preset heart rate threshold range.

Optionally, the processor 610 is further configured to: search, based on the current heart rate data, the correspondence for matching facial color data corresponding to the current heart rate data; determine a facial color difference between the matching facial color data and the current facial color data; and determine that the current facial color data matches the current heart rate data, in a case that the facial color difference falls within a preset facial color threshold range.

The foregoing biological feature recognition device 60 may be understood by referring to the descriptions of FIG. 1 to FIG. 5. Details are not described herein again.

A person of ordinary skill in the art may understand that all or some of the steps of the method in the embodiments may be implemented by relevant hardware instructed by programs. The programs may be stored in a computer readable storage medium. The storage medium may include: a ROM, a RAM, a magnetic disk, or an optical disc.

The biological feature recognition method and device provided in the embodiments of the present disclosure are described above in detail. Although the principles and implementations of the present disclosure are described by using specific examples in this specification, the descriptions of the foregoing embodiments are merely intended to help understanding the method of the present disclosure and the core idea thereof. In addition, a person of ordinary skill in the art may make modifications to the specific embodiments and application range according to the idea of the present disclosure. In conclusion, the content of this specification should not be construed as a limit on the present disclosure.

## Claims

1. A biological feature recognition method, comprising:
obtaining, by a biological feature recognition device, a facial image of a user on whom feature recognition is being performed and current heart rate data of the user;
determining, by the biological feature recognition device based on the facial image, current facial color data of the user and a correspondence between facial color data and heart rate data of the user; **characterized by** determining, by the biological feature recognition device based on the correspondence between the facial color data and the heart rate data of the user, whether the obtained current facial color data matches the current heart rate data;
determining, by the biological feature recognition device, that user identification succeeds, if the current facial color data matches the current heart rate data; and
determining, by the biological feature recognition device, that user identification fails, if the current facial color data does not match the current heart rate data.

2. The method according to claim 1, wherein before the obtaining, by a biological feature recognition device, a facial image of a user on whom feature recognition is being performed, the method further comprises:
receiving, by the biological feature recognition device, the correspondence between the facial color data and the heart rate data of the user; and
storing, by the biological feature recognition device, the correspondence, wherein the correspondence is obtained by collecting in advance, by the biological feature recognition device, facial color data of the user at different heart rates.

3. The method according to claim 1 or 2, wherein the determining, by the biological feature recognition device based on the correspondence between the facial color data and the heart rate data of the user, whether the obtained current facial color data matches the current heart rate data comprises:
searching, by the biological feature recognition device based on the current facial color data, the correspondence for matching heart rate data corresponding to the current facial color data;
determining, by the biological feature recognition device, a heart rate difference between the matching heart rate data and the current heart rate data; and
determining, by the biological feature recognition device, that the current facial color data matches the current heart rate data, in a case that the heart rate difference falls within a preset heart rate threshold range.

4. The method according to claim 1 or 2, wherein the determining, by the biological feature recognition device based on the correspondence between the facial color data and the heart rate data of the user, whether the obtained current facial color data matches the current heart rate data comprises:
searching, by the biological feature recognition device based on the current heart rate data, the correspondence for matching facial color data corresponding to the current heart rate data;
determining, by the biological feature recognition device, a facial color difference between the matching facial color data and the current facial color data; and
determining, by the biological feature recognition device, that the current facial color data matches the current heart rate data, in a case that the facial color difference falls within a preset facial color threshold range.

5. A biological feature recognition device, comprising:
an obtaining unit, configured to obtain a facial image of a user on whom feature recognition is being performed and current heart rate data of the user;
**characterized in that** the device further comprises:
a first determining unit, configured to determine, based on the facial image obtained by the obtaining unit, current facial color data of the user and a correspondence between facial color data and heart rate data of the user;
a second determining unit, configured to determine, based on the correspondence between the facial color data and the heart rate data of the user determined by the first determining unit, whether the current facial color data obtained by the obtaining unit matches the current heart rate data; and
a recognition unit, configured to determine that user identification succeeds if the second determining unit determines that the current facial color data matches the current heart rate data, and determine that user identification fails if the current facial color data does not match the current heart rate data.

6. The device according to claim 5, further comprising a receiving unit and a storage unit, wherein
the receiving unit is configured to receive the correspondence between the facial color data and the heart rate data of the user; and
the storage unit is configured to store the correspondence received by the receiving unit, wherein the correspondence is obtained by collecting in advance facial color data of the user at different heart rates.

7. The device according to claim 5 or 6, wherein
the second determining unit is configured to:
search, based on the current facial color data, the correspondence for matching heart rate data corresponding to the current facial color data;
determine a heart rate difference between the matching heart rate data and the current heart rate data;
and
determine that the current facial color data matches the current heart rate data, in a case that the heart rate difference falls within a preset heart rate threshold range.

8. The apparatus according to claim 5 or 6, wherein
the second determining unit is configured to:
search, based on the current heart rate data, the correspondence for matching facial color data corresponding to the current heart rate data;
determine a facial color difference between the matching facial color data and the current facial color data; and
determine that the current facial color data matches the current heart rate data, in a case that the facial color difference falls within a preset facial color threshold range.

9. A biological feature recognition device, comprising: a processor, a memory, a camera, and a heart rate collector, wherein
the camera is configured to acquire a facial image of a user on whom feature recognition is being performed;
the heart rate collector is configured to collect current heart rate data of the user; **characterized in that**
the memory is configured to store a correspondence between facial color data and heart rate data of the user; and
the processor is configured to obtain the facial image acquired by the camera, determine, based on the facial image, current facial color data of the user and the correspondence between the facial color data and the heart rate data of the user, and obtain current heart rate data of the user from the heart rate collector; determine, based on the correspondence between the facial color data and the heart rate data of the user, whether the obtained current facial color data matches the current heart rate data; and determine that user identification succeeds if the current facial color data matches the current heart rate data, and determine that the user identification fails if the current facial color data does not match the current heart rate data.

10. The device according to claim 9, further comprising a transceiver, wherein
the transceiver is configured to receive the correspondence between the facial color data and the heart rate data of the user, wherein the correspondence is obtained by collecting in advance facial color data of the user at different heart rates.

11. A non-volatile storage medium, configured to store one or more computer programs, wherein the computer programs comprise one or more processor executable instructions, and the instructions, when being executed by a computer, cause the computer to perform the following operations:
obtaining a facial image of a user on whom feature recognition is being performed and current heart rate data of the user; **characterized by** determining, based on the facial image, current facial color data of the user and a correspondence between facial color data and heart rate data of the user;
determining, based on the correspondence between the facial color data and the heart rate data of the user, whether the obtained current facial color data matches the current heart rate data;
determining that user identification succeeds if the current facial color data matches the current heart rate data; and
determining that the user identification fails if the current facial color data does not match the current heart rate data.

## Patentansprüche

1. Verfahren zur Erkennung biologischer Merkmale, umfassend:
Erhalten, durch ein Gerät zur Erkennung biologischer Merkmale, eines Gesichtsbildes eines Benutzers, an dem eine Merkmalserkennung durchgeführt wird, und aktueller Herzfrequenzdaten des Benutzers;
Bestimmen, durch das Gerät zur Erkennung biologischer Merkmale auf der Grundlage des Gesichtsbildes, aktueller Gesichtsfarbdaten des Benutzers und einer Korrespondenz zwischen Gesichtsfarbdaten und Herzfrequenzdaten des Benutzers;
**gekennzeichnet durch**:
Bestimmen, durch das Gerät zur Erkennung biologischer Merkmale auf der Grundlage der Korrespondenz zwischen den Gesichtsfarbdaten und den Herzfrequenzdaten des Benutzers, ob die erhaltenen aktuellen Gesichtsfarbdaten mit den aktuellen Herzfrequenzdaten matchen;
Bestimmen, durch das Gerät zur Erkennung biologischer Merkmale, dass eine Benutzeridentifizierung erfolgreich ist, falls die aktuellen Gesichtsfarbdaten mit den aktuellen Herzfrequenzdaten matchen; und
Bestimmen, durch das Gerät zur Erkennung biologischer Merkmale, dass eine Benutzeridentifizierung fehlschlägt, falls die aktuellen Gesichtsfarbdaten nicht mit den aktuellen Herzfrequenzdaten matchen.

2. Verfahren nach Anspruch 1, wobei das Verfahren vor dem Erhalten, durch ein Gerät zur Erkennung biologischer Merkmale, eines Gesichtsbildes eines Benutzers, an dem eine Merkmalserkennung durchgeführt wird, des Weiteren umfasst:
Empfangen, durch das Gerät zur Erkennung biologischer Merkmale, der Korrespondenz zwischen den Gesichtsfarbdaten und den Herzfrequenzdaten des Benutzers; und
Speichern, durch das Gerät zur Erkennung biologischer Merkmale, der Korrespondenz, wobei die Korrespondenz durch vorheriges Sammeln, durch das Gerät zur Erkennung biologischer Merkmale, von Gesichtsfarbdaten des Benutzers bei unterschiedlichen Herzfrequenzen erhalten wird.

3. Verfahren nach Anspruch 1 oder 2, wobei das Bestimmen, durch das Gerät zur Erkennung biologischer Merkmale auf der Grundlage der Korrespondenz zwischen den Gesichtsfarbdaten und den Herzfrequenzdaten des Benutzers, ob die erhaltenen aktuellen Gesichtsfarbdaten mit den aktuellen Herzfrequenzdaten matchen, umfasst:
Suchen, durch das Gerät zur Erkennung biologischer Merkmale auf der Grundlage der aktuellen Gesichtsfarbdaten, der Korrespondenz zum Matchen von Herzfrequenzdaten, die zu den aktuellen Gesichtsfarbdaten korrespondieren;
Bestimmen, durch das Gerät zur Erkennung biologischer Merkmale, einer Herzfrequenzdifferenz zwischen den matchenden Herzfrequenzdaten und den aktuellen Herzfrequenzdaten; und
Bestimmen, durch das Gerät zur Erkennung biologischer Merkmale, dass die aktuellen Gesichtsfarbdaten mit den aktuellen Herzfrequenzdaten matchen, in einem Fall, dass die Herzfrequenzdifferenz in einen voreingestellten Schwellenwertbereich der Herzfrequenz fällt.

4. Verfahren nach Anspruch 1 oder 2, wobei das Bestimmen, durch das Gerät zur Erkennung biologischer Merkmale auf der Grundlage der Korrespondenz zwischen den Gesichtsfarbdaten und den Herzfrequenzdaten des Benutzers, ob die erhaltenen aktuellen Gesichtsfarbdaten mit den aktuellen Herzfrequenzdaten matchen, umfasst:
Suchen, durch das Gerät zur Erkennung biologischer Merkmale auf der Grundlage der aktuellen Herzfrequenzdaten, der Korrespondenz zum Matchen von Gesichtsfarbdaten, die zu den aktuellen Herzfrequenzdaten korrespondieren;
Bestimmen, durch das Gerät zur Erkennung biologischer Merkmale, einer Gesichtsfarbdifferenz zwischen den matchenden Gesichtsfarbdaten und den aktuellen Gesichtsfarbdaten; und
Bestimmen, durch das Gerät zur Erkennung biologischer Merkmale, dass die aktuellen Gesichtsfarbdaten mit den aktuellen Herzfrequenzdaten matchen, in einem Fall, dass die Gesichtsfarbdifferenz in einen voreingestellten Schwellenwertbereich der Gesichtsfarbe fällt.

5. Gerät zur Erkennung biologischer Merkmale, umfassend:
eine Erhalteeinheit, die so konfiguriert ist, dass sie ein Gesichtsbild eines Benutzers, an dem eine Merkmalserkennung durchgeführt wird, und aktuelle Herzfrequenzdaten des Benutzers erhält;
**dadurch gekennzeichnet, dass** das Gerät des Weiteren umfasst:
eine erste Bestimmungseinheit, die so konfiguriert ist, dass sie, auf der Grundlage des Gesichtsbildes, das durch die Erhalteeinheit erhaltenen wurde, aktuelle Gesichtsfarbdaten des Benutzers und eine Korrespondenz zwischen Gesichtsfarbdaten und Herzfrequenzdaten des Benutzers bestimmt;
eine zweite Bestimmungseinheit, die so konfiguriert ist, dass sie, auf der Grundlage der Korrespondenz zwischen den Gesichtsfarbdaten und den Herzfrequenzdaten des Benutzers, die durch die erste Bestimmungseinheit bestimmt wurden, bestimmt, ob die aktuellen Gesichtsfarbdaten, die durch die Erhalteeinheit erhalten wurden, mit den aktuellen Herzfrequenzdaten matchen; und
eine Erkennungseinheit, die so konfiguriert ist, dass sie bestimmt, dass eine Benutzeridentifizierung erfolgreich ist, falls die zweite Bestimmungseinheit bestimmt, dass die aktuellen Gesichtsfarbdaten mit den aktuellen Herzfrequenzdaten matchen, und dass sie bestimmt, dass eine Benutzeridentifizierung fehlschlägt, falls die aktuellen Gesichtsfarbdaten nicht mit den aktuellen Herzfrequenzdaten matchen.

6. Gerät nach Anspruch 5, des Weiteren umfassend eine Empfangseinheit und eine Speichereinheit, wobei
die Empfangseinheit so konfiguriert ist, dass sie die Korrespondenz zwischen den Gesichtsfarbdaten und den Herzfrequenzdaten des Benutzers empfängt; und
die Speichereinheit so konfiguriert ist, dass sie die Korrespondenz, die von der Empfangseinheit empfangen wurde, speichert, wobei die Korrespondenz durch vorheriges Sammeln von Gesichtsfarbdaten des Benutzers bei unterschiedlichen Herzfrequenzen erhalten wird.

7. Gerät nach Anspruch 5 oder 6, wobei
die zweite Bestimmmungseinheit so konfiguriert ist, dass sie:
auf der Grundlage der aktuellen Gesichtsfarbdaten, die Korrespondenz zum Matchen von Herzfrequenzdaten, die zu den aktuellen Gesichtsfarbdaten korrespondieren, sucht;
eine Herzfrequenzdifferenz zwischen den matchenden Herzfrequenzdaten und den aktuellen Herzfrequenzdaten bestimmt; und
feststellt, dass die aktuellen Gesichtsfarbdaten mit den aktuellen Herzfrequenzdaten matchen, falls die Herzfrequenzdifferenz in einen voreingestellten Schwellenwertbereich der Herzfrequenz fällt.

8. Gerät nach Anspruch 5 oder 6, wobei
die zweite Bestimmungseinheit so konfiguriert ist, dass sie:
auf der Grundlage der aktuellen Herzfrequenzdaten, die Korrespondenz zum Matchen von Gesichtsfarbdaten, die zu den aktuellen Herzfrequenzdaten korrespondieren, sucht;
eine Gesichtsfarbendifferenz zwischen den matchenden Gesichtsfarbdaten und den aktuellen Gesichtsfarbdaten bestimmt; und
bestimmt, dass die aktuellen Gesichtsfarbdaten mit den aktuellen Herzfrequenzdaten matchen, falls die Gesichtsfarbendifferenz innerhalb eines voreingestellten Gesichtsfarben-Schwellenwertbereichs liegt.

9. Gerät zur Erkennung biologischer Merkmale, umfassend: einen Prozessor, einen Speicher, eine Kamera und einen Herzfrequenzsammler, wobei
die Kamera so konfiguriert ist, dass sie ein Gesichtsbild eines Benutzers, an dem eine Merkmalserkennung durchgeführt wird, erfasst;
der Herzfrequenzsammler so konfiguriert ist, dass er aktuelle Herzfrequenzdaten des Benutzers sammelt;
**dadurch gekennzeichnet, dass**
der Speicher so konfiguriert ist, dass er eine Korrespondenz zwischen Gesichtsfarbdaten und Herzfrequenzdaten des Benutzers speichert; und
der Prozessor so konfiguriert ist, dass er das Gesichtsbild, das von der Kamera erfasst wurde, erhält, auf der Grundlage des Gesichtsbildes die aktuellen Gesichtsfarbdaten des Benutzers und die Korrespondenz zwischen den Gesichtsfarbdaten und den Herzfrequenzdaten des Benutzers bestimmt, und aktuelle Herzfrequenzdaten des Benutzers von dem Herzfrequenzsammler erhält; auf der Grundlage der Korrespondenz zwischen den Gesichtsfarbdaten und den Herzfrequenzdaten des Benutzers bestimmt, ob die erhaltenen aktuellen Gesichtsfarbdaten mit den aktuellen Herzfrequenzdaten matchen; und bestimmt, dass eine Benutzeridentifizierung erfolgreich ist, falls die aktuellen Gesichtsfarbdaten mit den aktuellen Herzfrequenzdaten matchen, und bestimmt, dass eine Benutzeridentifizierung fehlschlägt, falls die aktuellen Gesichtsfarbdaten nicht mit den aktuellen Herzfrequenzdaten matchen.

10. Gerät nach Anspruch 9, des Weiteren umfassend einen Transceiver, wobei
der Transceiver so konfiguriert ist, dass er die Korrespondenz zwischen den Gesichtsfarbdaten und den Herzfrequenzdaten des Benutzers empfängt, wobei die Korrespondenz durch vorheriges Sammeln von Gesichtsfarbdaten des Benutzers bei unterschiedlichen Herzfrequenzen erhalten wird.

11. Nichtflüchtiges Speichermedium, das so konfiguriert ist, dass es ein oder mehrere Computerprogramme speichert, wobei die Computerprogramme einen oder mehrere durch einen Prozessor ausführbare Befehle umfassen, und die Befehle, wenn sie von einem Computer ausgeführt werden, den Computer veranlassen, die folgenden Operationen durchzuführen:
Erhalten eines Gesichtsbildes eines Benutzers, an dem eine Merkmalserkennung durchgeführt wird, und aktueller Herzfrequenzdaten des Benutzers;
**gekennzeichnet durch**:
Bestimmen, auf der Grundlage des Gesichtsbildes, aktueller Gesichtsfarbdaten des Benutzers und einer Korrespondenz zwischen Gesichtsfarbdaten und Herzfrequenzdaten des Benutzers;
Bestimmen, auf der Grundlage der Korrespondenz zwischen den Gesichtsfarbdaten und den Herzfrequenzdaten des Benutzers, ob die erhaltenen aktuellen Gesichtsfarbdaten mit den aktuellen Herzfrequenzdaten matchen;
Bestimmen, dass eine Benutzeridentifizierung erfolgreich ist, falls die aktuellen Gesichtsfarbdaten mit den aktuellen Herzfrequenzdaten matchen; und
Bestimmen, dass eine Benutzeridentifizierung fehlschlägt, falls die aktuellen Gesichtsfarbdaten nicht mit den aktuellen Herzfrequenzdaten matchen.

## Revendications

1. Procédé de reconnaissance de caractéristiques biologiques comprenant:
obtenir, par un dispositif de reconnaissance de caractéristiques biologiques, une image faciale d'un utilisateur sur lequel une reconnaissance de caractéristiques est effectuée ainsi que des données de fréquence cardiaque actuelles de l'utilisateur;
déterminer, par le dispositif de reconnaissance de caractéristiques biologiques, sur la base de l'image faciale, des données de couleur de visage actuelles de l'utilisateur et une correspondance entre des données de couleur de visage et des données de fréquence cardiaque de l'utilisateur;
**caractérisé par**
déterminer, par le dispositif de reconnaissance de caractéristiques biologiques, sur la base de la correspondance entre les données de couleur de visage et les données de fréquence cardiaque de l'utilisateur, si les données de couleur de visage actuelles obtenues et les données de fréquence cardiaque actuelles s'accordent;
déterminer, par le dispositif de reconnaissance de caractéristiques biologiques, qu'une identification d'utilisateur réussit, si les données de couleur de visage actuelles et les données de fréquence cardiaque actuelles s'accordent; et
déterminer, par le dispositif de reconnaissance de caractéristiques biologiques, qu'une identification d'utilisateur échoue, si les données de couleur de visage actuelles et les données de fréquence cardiaque actuelles ne s'accordent pas.

2. Procédé selon la revendication 1, dans lequel, avant d'obtenir, par un dispositif de reconnaissance de caractéristiques biologiques, une image faciale d'un utilisateur sur lequel une reconnaissance de caractéristiques est effectuée, le procédé comprend en outre:
recevoir, par le dispositif de reconnaissance de caractéristiques biologiques, la correspondance entre les données de couleur de visage et les données de fréquence cardiaque de l'utilisateur; et
stocker, par le dispositif de reconnaissance de caractéristiques biologiques, la correspondance, la correspondance étant obtenue en collectant à l'avance, par le dispositif de reconnaissance de caractéristiques biologiques, des données de couleur de visage de l'utilisateur à différentes fréquences cardiaques.

3. Procédé selon la revendication 1 ou 2, dans lequel la détermination, par le dispositif de reconnaissance de caractéristiques biologiques, sur la base de la correspondance entre les données de couleur de visage et les données de fréquence cardiaque de l'utilisateur, de savoir si les données de couleur de visage actuelles obtenues et les données de fréquence cardiaque actuelles s'accordent, comprend:
rechercher, par le dispositif de reconnaissance de caractéristiques biologiques, sur la base des données de couleur de visage actuelles, la correspondance pour faire correspondre des données de fréquence cardiaque qui correspondent aux données de couleur de visage actuelles;
déterminer, par le dispositif de reconnaissance de caractéristiques biologiques, une différence de fréquence cardiaque entre les données de fréquence cardiaque qui s'accordent et les données de fréquence cardiaque actuelles; et
déterminer, par le dispositif de reconnaissance de caractéristiques biologiques, que les données de couleur de visage actuelles et les données de fréquence cardiaque actuelles s'accordent, dans un cas où la différence de fréquence cardiaque se situe dans une plage de seuil de fréquence cardiaque prédéfinie.

4. Procédé selon la revendication 1 ou 2, dans lequel la détermination, par le dispositif de reconnaissance de caractéristiques biologiques, sur la base de la correspondance entre les données de couleur de visage et les données de fréquence cardiaque de l'utilisateur, de savoir si les données de couleur de visage actuelles obtenues et les données de fréquence cardiaque actuelles s'accordent, comprend:
rechercher, par le dispositif de reconnaissance de caractéristiques biologiques, sur la base des données de fréquence cardiaque actuelles, la correspondance pour faire correspondre des données de couleur de visage qui correspondent aux données de fréquence cardiaque actuelles;
déterminer, par le dispositif de reconnaissance de caractéristiques biologiques, une différence de couleur de visage entre les données de couleur de visage qui s'accordent et les données de couleur de visage actuelles; et
déterminer, par le dispositif de reconnaissance de caractéristiques biologiques, que les données de couleur de visage actuelles et les données de fréquence cardiaque actuelles s'accordent, dans un cas où la différence de couleur de visage se situe dans une plage de seuil de couleur de visage prédéfinie.

5. Dispositif de reconnaissance de caractéristiques biologiques comprenant:
une unité d'obtention configurée pour obtenir une image faciale d'un utilisateur sur lequel une reconnaissance de caractéristiques est effectuée ainsi que des données de fréquence cardiaque actuelles de l'utilisateur;
**caractérisé par le fait que** le dispositif comprend en outre:
une première unité de détermination configurée pour déterminer, sur la base de l'image faciale obtenue par l'unité d'obtention, des données de couleur de visage actuelles de l'utilisateur et une correspondance entre des données de couleur de visage et des données de fréquence cardiaque de l'utilisateur;
une deuxième unité de détermination configurée pour déterminer, sur la base de la correspondance entre les données de couleur de visage et les données de fréquence cardiaque de l'utilisateur déterminées par ladite première unité de détermination, si les données de couleur de visage actuelles obtenues par l'unité d'obtention et les données de fréquence cardiaque actuelles s'accordent; et
une unité de reconnaissance configurée pour déterminer qu'une identification d'utilisateur réussit si la deuxième unité de détermination détermine que les données de couleur de visage actuelles et les données de fréquence cardiaque actuelles s'accordent, et pour déterminer qu'une identification d'utilisateur échoue si les données de couleur de visage actuelles et les données de fréquence cardiaque actuelles ne s'accordent pas.

6. Dispositif selon la revendication 5, comprenant en outre une unité de réception et une unité de stockage, dans lequel
l'unité de réception est configurée pour recevoir la correspondance entre les données de couleur de visage et les données de fréquence cardiaque de l'utilisateur; et
l'unité de stockage est configurée pour stocker la correspondance reçue par l'unité de réception, la correspondance étant obtenue en collectant à l'avance des données de couleur de visage de l'utilisateur à différentes fréquences cardiaques.

7. Dispositif selon la revendication 5 ou 6, dans lequel
la deuxième unité de détermination est configurée pour:
rechercher, sur la base des données de couleur de visage actuelles, la correspondance pour faire correspondre des données de fréquence cardiaque correspondant aux données de couleur de visage actuelles;
déterminer une différence de fréquence cardiaque entre les données de fréquence cardiaque qui s'accordent et les données de fréquence cardiaque actuelles; et
déterminer que les données de couleur de visage actuelles et les données de fréquence cardiaque actuelles s'accordent, dans un cas où la différence de fréquence cardiaque se situe dans une plage de seuil de fréquence cardiaque prédéfinie.

8. Dispositif selon la revendication 5 ou 6, dans lequel
la deuxième unité de détermination est configurée pour:
rechercher, sur la base des données de fréquence cardiaque actuelles, la correspondance pour faire correspondre des données de couleur de visage correspondant aux données de fréquence cardiaque actuelles;
déterminer une différence de couleur de visage entre les données de couleur de visage qui s'accordent et les données de couleur de visage actuelles; et
déterminer que les données de couleur de visage actuelles et les données de fréquence cardiaque actuelles s'accordent, dans un cas où la différence de couleur de visage se situe dans une plage de seuil de couleur de visage prédéfinie.

9. Dispositif de reconnaissance de caractéristiques biologiques, comprenant: un processeur, une mémoire, une caméra et un collecteur de fréquence cardiaque, dans lequel
la caméra est configurée pour acquérir une image faciale d'un utilisateur sur lequel une reconnaissance de caractéristique est effectuée;
le collecteur de fréquence cardiaque est configuré pour collecter des données de fréquence cardiaque actuelles de l'utilisateur;
**caractérisé par le fait que**
la mémoire est configurée pour stocker une correspondance entre des données de couleur de visage et des données de fréquence cardiaque de l'utilisateur; et
le processeur est configuré pour obtenir l'image faciale acquise par la caméra, déterminer, sur la base de l'image faciale, des données de couleur de visage actuelles de l'utilisateur et la correspondance entre les données de couleur de visage et les données de fréquence cardiaque de l'utilisateur, et obtenir des données de fréquence cardiaque actuelles de l'utilisateur en provenance du collecteur de fréquence cardiaque; déterminer, sur la base de la correspondance entre les données de couleur de visage et les données de fréquence cardiaque de l'utilisateur, si les données de couleur de visage actuelles obtenues et les données de fréquence cardiaque actuelles s'accordent; et déterminer qu'une identification d'utilisateur réussit si les données de couleur de visage actuelles et les données de fréquence cardiaque actuelles s'accordent, et déterminer qu'une identification d'utilisateur échoue si les données de couleur de visage actuelles et les données de fréquence cardiaque actuelles ne s'accordent pas.

10. Dispositif selon la revendication 9, comprenant en outre un émetteur-récepteur, dans lequel
l'émetteur-récepteur est configuré pour recevoir la correspondance entre les données de couleur de visage et les données de fréquence cardiaque de l'utilisateur, la correspondance étant obtenue en collectant à l'avance des données de couleur de visage de l'utilisateur à différentes fréquences cardiaques.

11. Support de stockage non volatile, configuré pour stocker un ou plusieurs programmes informatiques, dans lequel les programmes informatiques comprennent une ou plusieurs instructions exécutables par processeur, et les instructions, lorsqu'elles sont exécutées par un ordinateur, amènent l'ordinateur à mettre en œuvre les opérations suivantes:
obtenir une image faciale d'un utilisateur sur lequel une reconnaissance de caractéristiques est effectuée ainsi que des données de fréquence cardiaque actuelles de l'utilisateur;
**caractérisé par**
déterminer, sur la base de l'image faciale, des données de couleur de visage actuelles de l'utilisateur et une correspondance entre des données de couleur de visage et des données de fréquence cardiaque de l'utilisateur;
déterminer, sur la base de la correspondance entre les données de couleur de visage et les données de fréquence cardiaque de l'utilisateur, si les données de couleur de visage actuelles obtenues et les données de fréquence cardiaque actuelles s'accordent:
déterminer qu'une identification d'utilisateur réussit, si les données de couleur de visage actuelles et les données de fréquence cardiaque actuelles s'accordent; et
déterminer qu'une identification d'utilisateur échoue, si les données de couleur de visage actuelles et les données de fréquence cardiaque actuelles ne s'accordent pas.
